# EUROPEAN PATENT APPLICATION

(11) **EP 2 827 105 A1**
(43) Date of publication of application: **21.01.2015**
(21) Application number: 14174619.8
(22) Date of filing: 26.06.2014
(51) Int. Cl.: G01C 23/00

(54) **Display systems and methods for providing displays having an adaptive combined vision system**

(30) Priority: 15.07.2013 US 201313942062
(71) Applicant: Honeywell International Inc., Morristown, NJ 07962-2245 (US)
(72) Inventor: Krishna, Kiran Gopala, Morristown, NJ New Jersey 07962-2245 (US); Gurusamy, Saravanakumar, Morristown, NJ New Jersey 07962-2245 (US)
(74) Representative: Houghton, Mark Phillip

(57) **Abstract**

A method for providing a display to a flight crew of an aircraft includes the steps of providing a synthetic image comprising a first field of view forward of a direction of travel of the aircraft and providing a sensory image overlaying at least a first portion of the synthetic image. The sensory image includes a second field of view forward of the direction of travel of the aircraft. At least a portion of the first field of view and a portion of the second field of view overlap one another. The sensory image is centered within the synthetic image with respect to a horizontal axis. The method further includes moving the sensory image so as to overlay at least a second portion of the synthetic image such that the sensory image is no longer centered with respect to the horizontal axis within the synthetic image.

## Description

### TECHNICAL FIELD

The present disclosure generally relates to display systems, including aircraft display systems, and methods for providing displays. More particularly, the present disclosure relates to display systems and methods for providing displays having an adaptive combined vision system.

### BACKGROUND

Display systems are known in the art that include a sensory image overlaid on a synthetic image. In the context of a primary flight display in the cockpit of an aircraft, for example, such display systems may include a synthetic image of an area forward of the direction of travel, with a sensory image overlaid over a portion of the synthetic image. Such systems are commonly referred to in the art as "combined vision systems" ("CVS"), and are provided to increase the decision aiding cues available to the pilot of the aircraft when flying at low altitudes and under low visibility conditions.

In known CVS systems, the sensory image is always fixed in the middle of the synthetic image, and only occupies a small portion of the overall display. As is known in the art, it has been found that, even if the sensory image is capable of capturing the entire area shown by the display, uneven reflected colors captured in the sensory image do not blend smoothly with the synthetic image. Thus, it is generally desirable for the synthetic image to show only the details that are particularly relevant to aiding the pilot, such as the runway and the immediately surrounding area. In this manner, it is generally desirable for the sensory image to occupy only a portion of the synthetic image over which it is positioned, such as less than half of the synthetic image or smaller.

In such systems, however, in circumstances where the aircraft is executing turns, such as a circling approach, the sensory image, which is centered within the synthetic image and is smaller than the synthetic image, will fail to capture the relevant imagery that the aircraft will actually encounter and that is desirable to display to the pilot, such as the runway. Further, in situations such as cross-wind landings, where the angle of the aircraft does not coincide with the direction of travel, the sensory image will likewise fail to capture the relevant imagery that the aircraft will actually encounter. Thus, the prior art remains deficient.

Accordingly, it is desirable to provide improved display systems and methods for providing displays that overcome the deficiencies in the prior art. Furthermore, other desirable features and characteristics of the present disclosure will become apparent from the subsequent detailed description of the inventive subject matter and the appended claims, taken in conjunction with the accompanying drawings and this background of the inventive subject matter.

### BRIEF SUMMARY

Display systems and methods for providing displays are disclosed. In one exemplary embodiment, a method for providing a display to a flight crew of an aircraft includes the steps of providing a synthetic image including a first field of view forward of a direction of travel of the aircraft and providing a sensory image overlaying a first portion of the synthetic image. The sensory image includes a second field of view forward of the direction of travel of the aircraft. At least a portion of the first field of view and the second field of view overlap one another. The sensory image is centered within the synthetic image with respect to a horizontal axis. The method further includes moving the sensory image so as to include a third field of view forward of the direction of travel of the aircraft and so as to overlay a second portion of the synthetic image such that the sensory image is no longer centered with respect to the horizontal axis within the synthetic image. At least a portion of the first field of view and the third field of view overlap one another.

In another exemplary embodiment, a display system configured to provide a display to a flight crew of an aircraft includes an image sensor, an image display device, a data storage device that stores navigation information and runway information, and a computer processor device. The computer processor device is configured to generate for display on the image display device a synthetic image that includes a first field of view forward of a direction of travel of the aircraft based at least in part on the navigation information and the runway information. The computer processor device is further configured to receive for display on the image display device and from the image sensor a sensory image and display the sensory image overlaying a first portion of the synthetic image. The sensory image includes a second field of view forward of the direction of travel of the aircraft. At least a portion of the first field of view and the second field of view overlap one another. The sensory image is centered within the synthetic image with respect to a horizontal axis. Still further, the computer processor device is configured to receive for display on the image display device and from the image sensor a further sensory image that includes a third field of view forward of the direction of travel of the aircraft and move the sensory image so as to overlay a second portion of the synthetic image such that the sensory image is no longer centered with respect to the horizontal axis within the synthetic image. At least a portion of the first field of view and the third field of view overlap one another.

In yet another exemplary embodiment, a method for providing a display to a flight crew of an aircraft includes the following steps: while the aircraft is descending but prior to reaching a first predetermined position, providing a first synthetic image that includes a first field of view forward of a direction of travel of the aircraft and providing a first sensory image overlaying a first portion of the first synthetic image. The first sensory image includes a second field of view forward of the direction of travel of the aircraft. At least a portion of the first field of view and the second field of view overlap one another. The first sensory image is centered within the first synthetic image with respect to a horizontal axis. While the aircraft is descending and after reaching the first predetermined position but prior to reaching a second predetermined position, the method further includes providing a second synthetic image that includes the first field of view forward of the direction of travel of the aircraft, and providing a second sensory image overlaying a first portion of the second synthetic image. The second sensory image includes a third field of view forward of the direction of travel of the aircraft. At least a portion of the first field of view and the third field of view overlap one another. The second sensory image is centered on a flight path vector with respect to the horizontal axis. Still further, while the aircraft is descending and after reaching the second predetermined position but prior to reaching a runway, the method includes providing a third synthetic image that includes the first field of view forward of the direction of travel of the aircraft and the runway and providing a third sensory image overlaying a first portion of the third synthetic image. The third sensory image includes a third field of view forward of the direction of travel of the aircraft and the runway. At least a portion of the first field of view and the third field of view overlap one another. The third sensory image is centered on a touchdown zone of the runway with respect to the horizontal axis.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

The present disclosure will hereinafter be described in conjunction with the following drawing figures, wherein like numerals denote like elements, and wherein:
FIG. 1A is a functional block diagram of a display system according to an exemplary embodiment;
FIG. 1B is an exemplary CVS display rendered by the display system shown in FIG. 1A;
FIG. 2 is a CVS display known in the prior art;
FIG. 3 is a CVS display in accordance with various embodiments of the present disclosure;
FIG. 4 is another CVS display in accordance with various embodiments of the present disclosure;
FIGS. 5A and 5B provide still further CVS displays in accordance with various embodiments of the present disclosure;
FIG. 6 is a flow diagram illustrating method of providing a flight display in accordance with various embodiments of the present disclosure; and
FIG. 7 is another flow diagram illustrating method of providing a flight display in accordance with various embodiments of the present disclosure.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

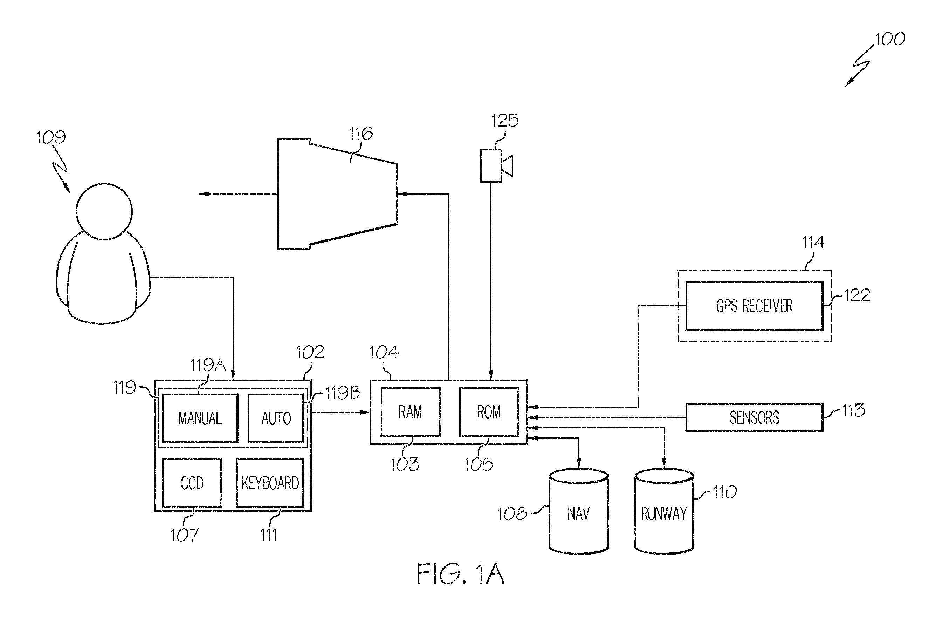

Referring to FIG. 1A, an exemplary display system, such as but not limited to an aircraft display system, is depicted and will be described. The system 100 includes a user interface 102, a processor 104, one or more navigation databases 108, one or more runway databases 110, various navigation sensors 113, various external data sources 114, one or more display devices 116, and an imaging sensor 125. In some embodiments, the imaging sensor 125 can be an electro-optical camera, an infrared camera, a millimeter-wave imager, or an active radar, e.g. millimeter-wave radar. The sensor 125 may be fixed in position, or it may be movable (i.e., left, right, up, or down) upon appropriate signals provided thereto. The user interface 102 is in operable communication with the processor 104 and is configured to receive input from a user 109 (e.g., a pilot) and, in response to the user input, supply command signals to the processor 104. The user interface 102 may be any one, or combination, of various known user interface devices including, but not limited to, a cursor control device (CCD) 107, such as a mouse, a trackball, or joystick, and/or a keyboard, one or more buttons, switches, or knobs. In the depicted embodiment, the user interface 102 includes a CCD 107 and a keyboard 111. The user 109 uses the CCD 107 to, among other things, move a cursor symbol on the display screen, and may use the keyboard 111 to, among other things, input textual data. Furthermore, in one embodiment, the user interface 102 includes a control panel 119 including at least a "Manual" button 119A and an "Automatic" or "Auto" button 119B that are operable to switch the mode of operation of the display system 100 among the CVS modes, as will be discussed in greater detail below.

The processor 104 may be any one of numerous known general-purpose microprocessors or an application specific processor that operates in response to program instructions. In the depicted embodiment, the processor 104 includes on-board RAM (random access memory) 103, and on-board ROM (read only memory) 105, and/or other non-transitory data storage media known in the art. The program instructions that control the processor 104 may be stored in either or both the RAM 103 and the ROM 105. For example, the operating system software may be stored in the ROM 105, whereas various operating mode software routines and various operational parameters may be stored in the RAM 103. It will be appreciated that this is merely exemplary of one scheme for storing operating system software and software routines, and that various other storage schemes may be implemented. It will also be appreciated that the processor 104 may be implemented using various other circuits, in addition to or in lieu of a programmable processor. For example, digital logic circuits and analog signal processing circuits could also be used.

Regardless of how the processor 104 is specifically implemented, it is in operable communication with the sensor 125 and the display device 116, and is coupled to receive data about the installation of the imaging sensor 125 on the aircraft. In one embodiment, this information can be hard-coded in the ROM memory 105. In another embodiment, this information can be entered by a pilot. In yet another embodiment, an external source of aircraft data can be used. The information about the installation of the sensor 125 on board may include, for example, that it is forward looking and aligned with the main axis of the aircraft body in the horizontal direction. More precise information may be provided, such as but not limited to, detailed information about sensor position in the aircraft reference frame, or sensor projection characteristics.

In one embodiment, the processor 104 may further receive navigation information from navigation sensors 113 or 114, identifying the position of the aircraft. In some embodiments, information from navigation database 108 may be utilized during this process. Having navigation information, the processor 104 may be further configured to receive information from runway database 110. In some embodiments, the display system includes a combined vision system (CVS). In particular, the imaging sensor 125 may include the CVS sensor, the processor 104 may include a CVS processor, and the display device 116 may include a CVS display. The CVS system may also use other data sources such as terrain database, obstacle database, etc.

The navigation databases 108 include various types of navigation-related data. These navigation-related data include various flight plan related data such as, for example, waypoints, distances between waypoints, headings between waypoints, data related to different airports, navigational aids, obstructions, special use airspace, political boundaries, communication frequencies, and aircraft approach information. It will be appreciated that, although the navigation databases 108 and the runway databases 110 are, for clarity and convenience, shown as being stored separate from the processor 104, all or portions of either or both of these databases 108, 110 could be loaded into the RAM 103, or integrally formed as part of the processor 104, and/or RAM 103, and/or ROM 105. The databases 108, 110 could also be part of a device or system that is physically separate from the system 100. The sensors 113 may be implemented using various types of inertial sensors, systems, and or subsystems, now known or developed in the future, for supplying various types of inertial data. The inertial data may also vary, but preferably include data representative of the state of the aircraft such as, for example, aircraft speed, heading, altitude, and attitude. The number and type of external data sources 114 may also vary. The external systems (or subsystems) may include, for example, a flight director and a navigation computer, and various position detecting systems. However, for ease of description and illustration, only a global position system (GPS) receiver 122 is depicted in FIG. 1A. The GPS receiver is a common embodiment of Global Navigation Satellite System (GNSS). In other embodiments, other GNSS systems, for example but not limited to Russian GLONASS or European Galileo, including multi-constellation systems, may be used.

The GPS receiver 122 is a multi-channel receiver, with each channel tuned to receive one or more of the GPS broadcast signals transmitted by the constellation of GPS satellites (not illustrated) orbiting the earth. Each GPS satellite encircles the earth two times each day, and the orbits are arranged so that at least four satellites are always within line of sight from almost anywhere on the earth. The GPS receiver 122, upon receipt of the GPS broadcast signals from at least three, and preferably four, or more of the GPS satellites, determines the distance between the GPS receiver 122 and the GPS satellites and the position of the GPS satellites. Based on these determinations, the GPS receiver 122, using a technique known as trilateration, determines, for example, aircraft position, groundspeed, and ground track angle.

The display device 116, as noted above, in response to display commands supplied from the processor 104, selectively renders various textual, graphic, and/or iconic information, and thereby supply visual feedback to the user 109. It will be appreciated that the display device 116 may be implemented using any one of numerous known display devices suitable for rendering textual, graphic, and/or iconic information in a format viewable by the user 109. Non-limiting examples of such display devices include various cathode ray tube (CRT) displays, and various flat panel displays such as various types of LCD (liquid crystal display) and TFT (thin film transistor) displays. The display device 116 may additionally be implemented as a panel mounted display, a HUD (head-up display) projection, or any one of numerous known or emerging technologies. It is additionally noted that the display device 116 may be configured as any one of numerous types of aircraft flight deck displays. For example, it may be configured as a multi-function display, a horizontal situation indicator, or a vertical situation indicator. In the depicted embodiment, however, the display device 116 is configured as a primary flight display (PFD).

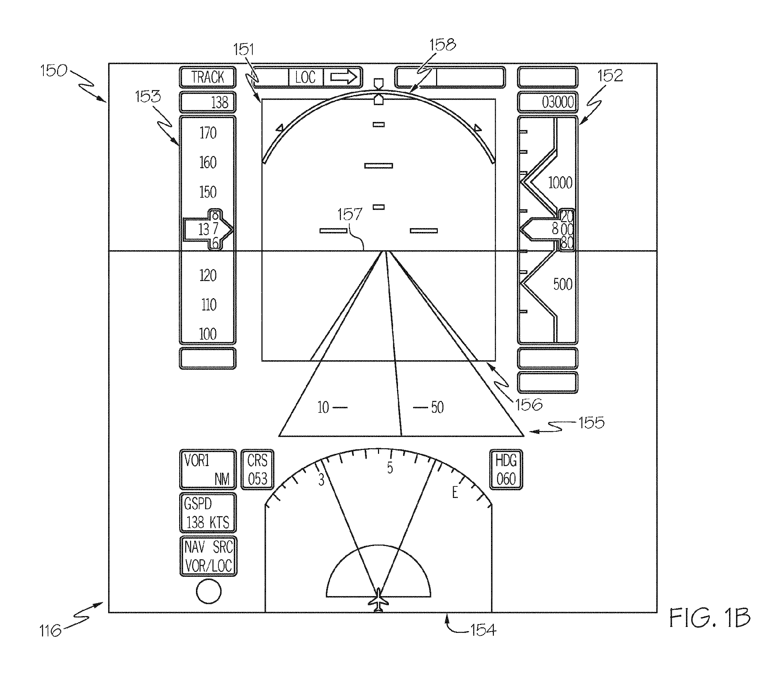

FIG. 1B illustrates an exemplary CVS display as may be provided by the display device 116. As shown, the CVS display includes a synthetic image 150 and a sensory image 151 overlaid over a portion of the synthetic image. The synthetic image 150 further includes various aircraft instrument data such as an altimeter 152, and air speed indicator 153, a compass 154, a flight path vector symbol 157, an attitude indicator 158, and other data as is known in the art to be provided on a PFD. FIG. 1B is not intended to limit the information that may be provided in connection with the synthetic imagery, and is merely exemplary in nature. As shown, the aircraft is on short approach to a runway. As such, the CVS display includes a synthetic image of the runway 155 and a sensory image of the runway 156, centered within an upper portion of the synthetic display 150. As noted above, the sensory image 151 is displayed in the illustrated manner to provide the pilot additional cues regarding important flight information, such as an image of the runway towards which the aircraft is approaching.

As such, FIG. 1B depicts an idealized situation wherein the aircraft is making a "straight in" approach to the runway, and there is little or no cross-wind that would cause the aircraft to "crab" in a direction other than the runway heading. As noted above, CVS systems know in the art are well-suited for such situations. The sensory image 151, however, may fail to show the runway, or may only show a portion of the runway, when the aircraft is making a circling approach or when there is a cross wind. Desirably, embodiments of the present disclosure are directed to an improved display system, and method for providing a display, wherein the sensory image of the CVS is provided in an "adaptive" manner such that its position within the synthetic image moves and adapts to the aircraft's movements.

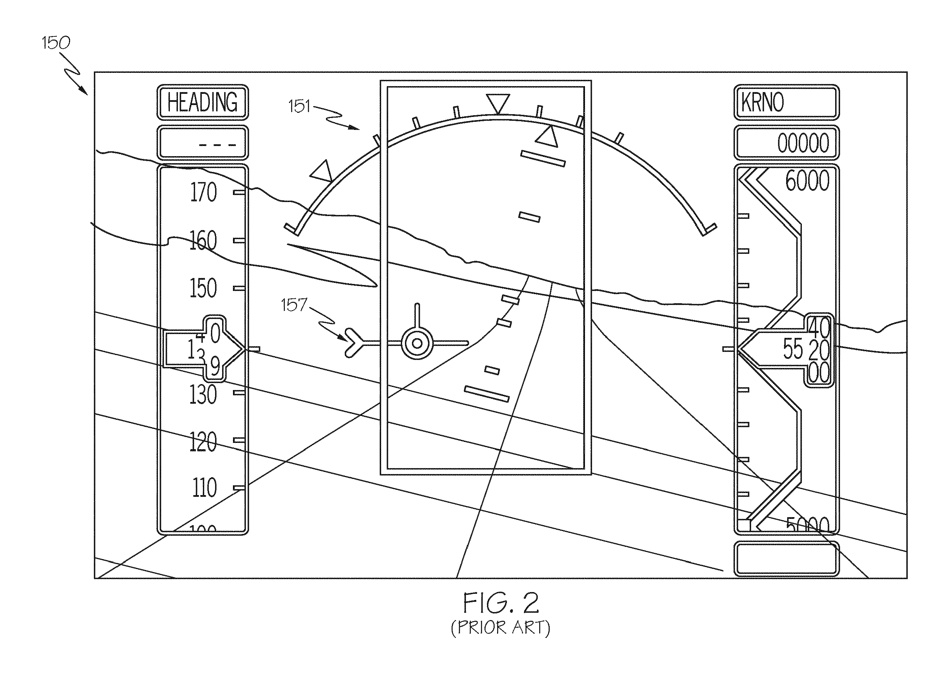

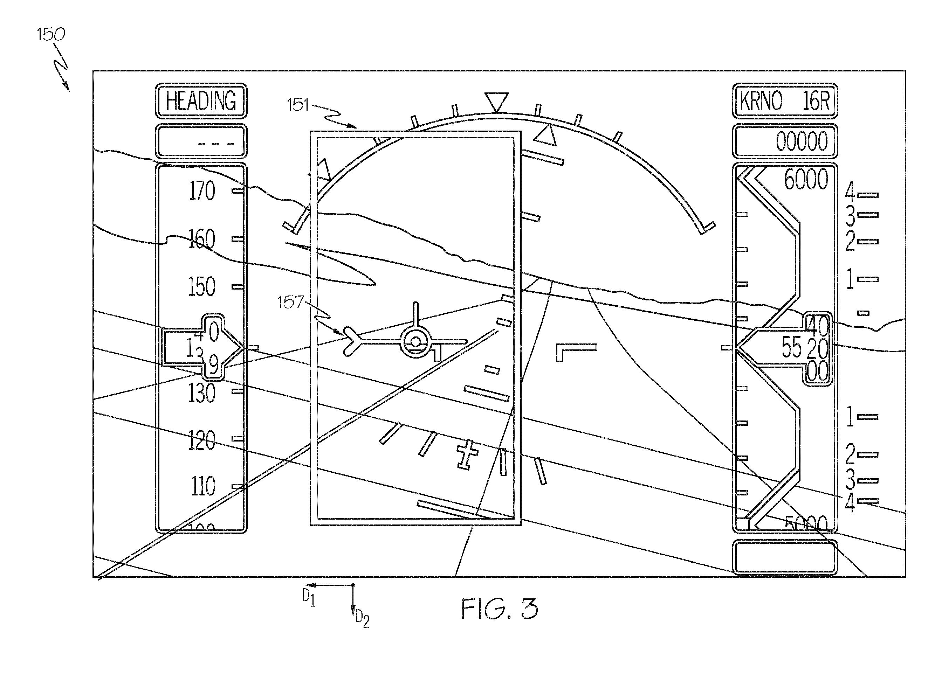

FIGS. 2 and 3 are provided to illustrate the differences between CVS systems known in the prior art (FIG. 2) and display systems in accordance with various embodiments described herein (FIG. 3). As shown in FIGS. 2 and 3, the aircraft is making a left turn to line-up with the runway while on approach, as indicated by the position of the flight path vector symbol 157. FIG. 2, which illustrates a conventional CVS display known in the art, shows that the sensory image 151 remains centered within the synthetic image 150, regardless of the fact that the aircraft is turning left. A majority of the terrain captured and enhanced by the CVS will not be encountered by the current flight due to the turn, and as such it is less usable for the flight crew. FIG. 3, in contrast, which illustrates a display, such as a CVS display, in accordance with one embodiment, shows that the sensory image 151 has shifted its position to the left by an amount D₁ to account for the fact that the aircraft is changing course to the left, and the fact that the center of the synthetic image no longer reflects the area toward which the aircraft is flying. Further, FIG. 3 illustrates that the sensory image 151 has shifted its position downward by an amount D₂ to account for the aircraft's descending attitude.

In an exemplary embodiment, the amount that the sensory image 151 is shifted from center (i.e., up, down, left, or right) of the synthetic image 150 depends upon the attitude of the aircraft. For example, a five degree banking turn will shift the image 151 to the left or right by a relatively small amount, whereas a thirty degree banking turn will shift the image 151 by a relatively larger amount. Likewise, a five degree descending angle will shift the image 151 downward by a relatively small amount, whereas a ten degree descending angle will shift the image 151 downward by a relatively larger amount. All forms and amounts of lateral and vertical translation of the sensory image 151 within the synthetic image 150 will thus be understood to be within the scope of the present disclosure.

In an exemplary embodiment, the amount of shift from center of the sensory image 151 relative to the synthetic image 150 is coordinated based on the movement of the flight path vector symbol 157, which, as noted above, is already provided on many CVS systems known in the art. As shown in FIG. 3, the sensory image 151 is centered on the flight path vector symbol 157, which moves as the aircraft attitude changes, as compared to the conventional example shown in FIG. 2, which remains centered within the synthetic image 150 regardless of the attitude of the aircraft. Thus, the flight path vector symbol 157 provides a convenient reference for adaptively shifting the sensory image 151 based on the movement of the aircraft, which may not require additional flight path calculations or computations beyond those performed in conventional systems. Because the flight follows the flight path vector 157, using symbol 157 as a reference for shifting the sensory image within the synthetic image may provide better awareness of the terrain along the flight path provided by the CVS and, resulting in enhanced usability and safety.

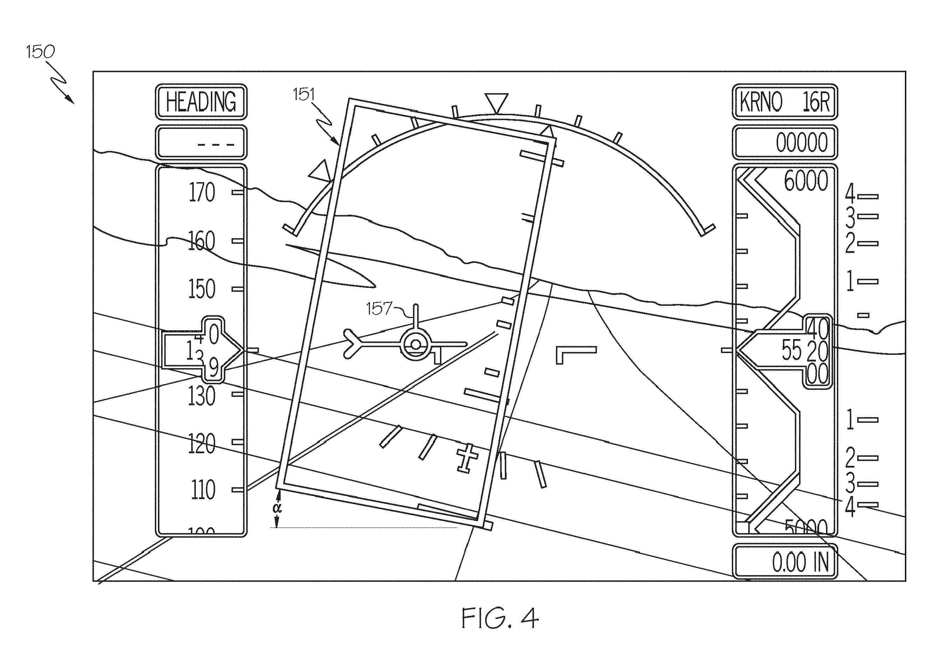

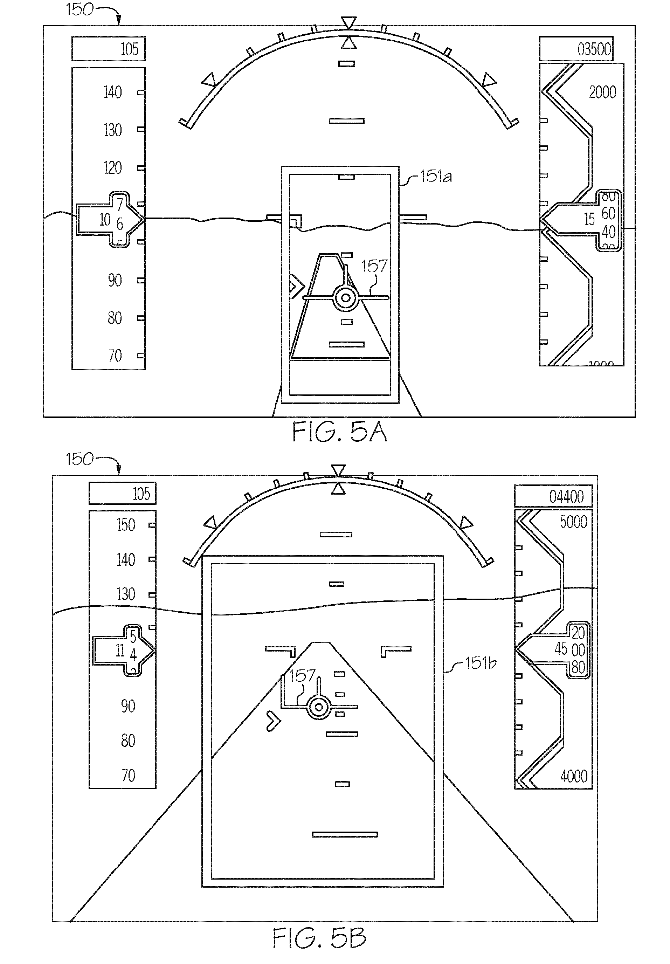

Further embodiments of the present disclosure are depicted in FIGS. 4, 5A, and 5B. In FIG. 4, the sensory image 151 is shown rotated to the right by an angle α to better align the sensory image with the horizon. In embodiments where the sensory image is provided in rectangular form, the banking of the aircraft will cause some portions of the rectangle to show areas to the left or right of the desired target area. As such, by rotating the image in coincidence with the horizon, the rectangular sensory image 151 provides more information that is relevant to the pilot. Horizon information is generally available in PFD / CVS systems known in the art, and as such this rotational movement of the sensory image 151 may not require any additional flight path calculations or computations beyond what is already performed in conventional systems.

In FIGS. 5A and 5B, the sensory image is shown in a diminished size (151a) and an enlarged size (151b), respectively. As the aircraft approaches a runway, the size of the runway within the field of view increases. Thus, in order to achieve the dual goals of maintaining the sensory image at a desirably small size to reduce visual clutter, while still showing the most relevant information to the pilot by means of the sensory image, the sensory image 151 may be increased in size as the aircraft approaches the runway such that the entire runway remains within the sensory image as the portion thereof within the field of view (i.e., within the synthetic image 150) increases. The sensory image 151 may likewise be reduced in size in instances where the desired target within the field of view becomes smaller.

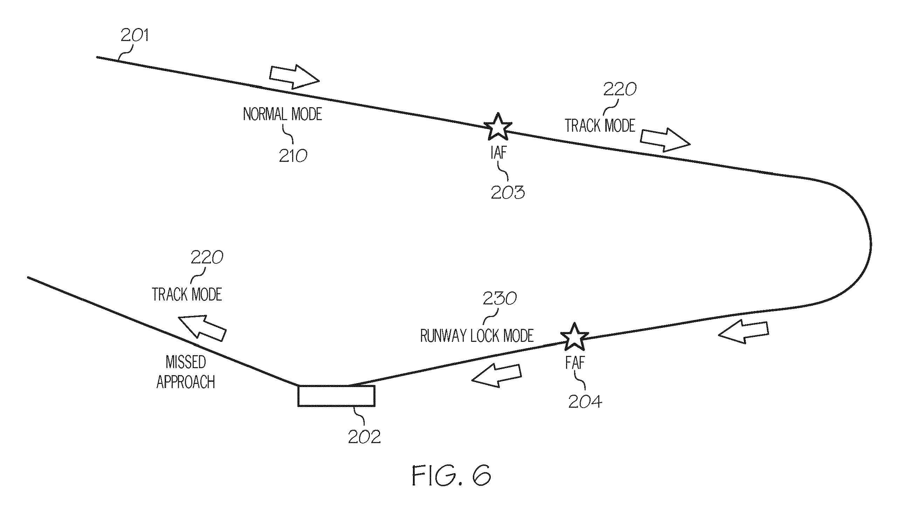

The various exemplary embodiments of a display system having now been described, FIG. 6 provides an exemplary method of providing a display in accordance with various embodiments. FIG. 6 illustrates an exemplary flight path 201 of an aircraft. The flight path 201 depicts a normal approach and descent toward a runway 202, with the approach terminating as a missed approach. Shown along the flight path 201 is an initial approach fix 203 (IAF) and a final approach fix (FAF) 204 as the flight path 201 approaches the runway 202. In the exemplary method, prior to reaching the IAF 203, the flight display is provided in a "normal mode" 210. The term normal mode 210 refers to operation of the CVS as is conventionally known in the art, with the sensory image 151 remaining centered within the synthetic image 150 at all times, as shown in FIG. 2. As the approach continues, once the aircraft reaches a predetermined point along the approach path 201, such as the IAF 203, the flight display may be provided in a "track mode" 220. As used herein, the term track mode 220 refers to operation of the CVS wherein the position, angle, and/or size of the sensory image 151 changes based on the attitude and position of the aircraft, for example in accordance with the flight path vector symbol 157. As described in greater detail above, in track mode, the sensory image 151 may translate left, right, up, or down, it may rotate clockwise or counterclockwise, and may increase or decrease in size. As the approach continues, once the aircraft, reaches a second predetermined point along the approach path 201, such as the FAF 204, the flight display is provided in a "runway lock mode" 230. As used herein, the term runway lock mode 230 refers to operation of the CVS wherein the sensory image remains fixed on the runway, for example it may be centered on a touchdown zone of the runway. As noted above, the system 100 includes navigation data 108 and runway data 110, and such data may be used to maintain the sensory image 151 focused over the runway image 155 displayed on the synthetic image 150. As such, the position, angle, and/or size of the sensory image 151 may change in runway lock mode 230 as in track mode 220, but the focal point of the image is on the runway, rather than the flight path vector symbol 157. Runway lock mode enables 230 the pilot to quickly scan any obstacles/intrusions on the runway irrespective of the current aircraft heading/track when in final approach, thereby enabling the pilot to execute a "go around" well in advance. This feature increases the safety envelope and provides few extra seconds for pilot decision making. Further, in the event of a missed approach, as shown in FIG. 6, the flight display may again be provided in the track mode.

The presently described method may feature automatic transitioning between the above-noted modes. For example, once the aircraft starts descending, the CVS may be displayed in normal mode. Near the IAF 203, the CVS image may transition into the track mode, where the image is centered on the FPV. Near the FAF 204, once the runway is in view, the CVS image may transition into the runway lock mode so that the image is centered on the runway. If the landing is aborted and a missed approach is performed, the runway image will slide out of the view and the CVS image will again automatically transition to track mode

In some embodiments, the operation of flight display system 100 may be provided in connection with an air traffic alert system, such as traffic collision avoidance system (TCAS). As is known in the art, a TCAS system includes a display, such as a primary flight display, with symbols superimposed thereover indicating the position and altitude of other aircraft within a pre-defined vicinity of the aircraft. As such, the TCAS system includes data representing the position of other nearby aircraft. The presently described flight display system may be provided to operate in association with a TCAS system. For example, in one embodiment, the CVS system may be provided in an "alert mode." As used herein, the term alert mode refers to the operation of the CVS wherein, based on the location of a traffic alert (TA) issued by the TCAS system, the sensory image 151 may be centered on the "intruder" aircraft location if the aircraft is within the CVS view frustum. Alert mode may be provided in place of any other operational mode, as needed based on the receipt of a traffic alert.

In further embodiments, the alert mode may be provided to operate in coordination with other alerting systems of the aircraft, such as terrain or obstacle alerting systems. Thus, based on a terrain alert or an obstacle alert, the sensory image 151 may be positioned on the obstacle location if it is within the CVS view frustum. This mode of operation gives precise awareness of the obstacle/intruder's location to avoid a collision.

Regarding any mode described above, a mode over-ride option may be provided for the pilot to choose an alternate mode other than the one provided automatically by the system.

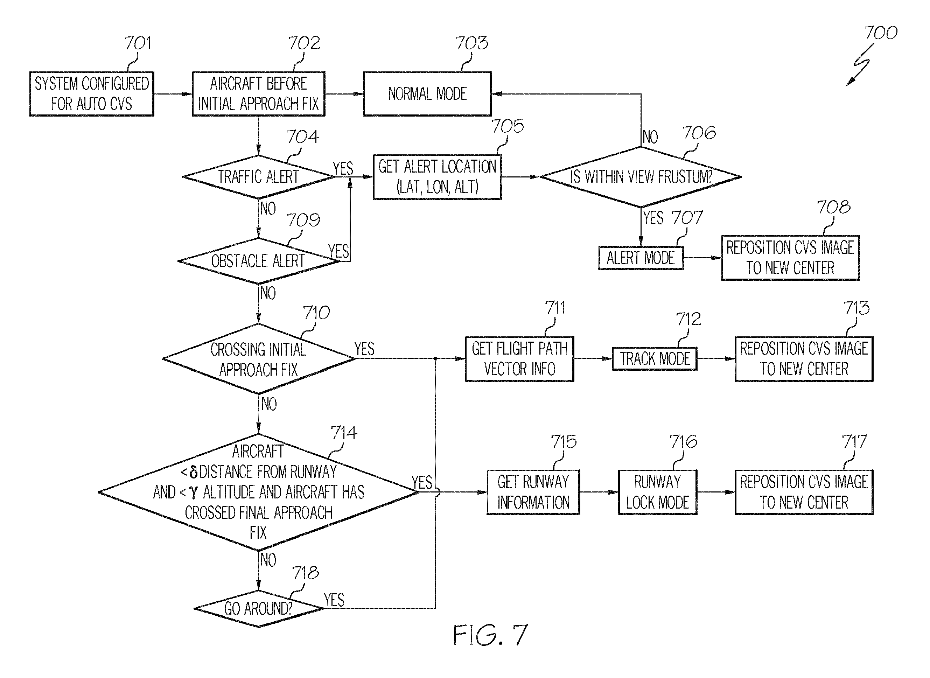

FIG. 7 is a block diagram illustrating an exemplary method of operation 700 of the display system described above. As shown therein, the method may initiate with the selection of an "auto CVS" mode, for example by the pilot making an appropriate entry into system 100 initiating the operation of the system. At a position along an approach to an airport prior to the IAF, as shown at block 702, the CVS system may automatically operate in the normally operating mode as indicated at block 703. The system is in continuous communication with the various alert functionality of the aircraft with which it is designed to operate. For traffic alerts, as shown at block 704, the system first receives the position of aircraft in the vicinity at block 705, and then determines if the traffic is within the field of view of the CVS system at block 706. If the determination is negative, the CVS system continues in normal mode. If the determination is positive, the CVS system operates in alert mode as indicated at block 707, and, as described above, the sensory image is repositioned to the intruder aircraft at block 708. The same procedure may be followed for obstacles or terrain, as indicated at block 709.

At a further position along the approach to the airport, such as upon crossing the IAF as indicated at block 710, flight path vector information is retrieved from the PFD at block 711 and the CVS system changes to track mode at block 712. As described above, in track mode, the sensory image changes position based on the flight path of the aircraft, for example as indicated by the flight path vector, as shown at block 713.

Thereafter, at a further position along the approach to the airport, such as within a given distance and altitude, or at the FAF, as shown at block 714, the CVS system retrieves runway information at block 715 and the CVS system change to runway lock mode at block 716. As described above, in runway lock mode, the sensory image change position to be fixed on the runway, for example centered at the landing zone of the runway. In the event of a go-around, as shown at block 718, the CVS system reverts to track mode.

As such, the embodiments described herein provide an adaptive combined vision system that allows the position of the sensory image within the synthetic image to change under various circumstances. The embodiments allow the sensory image to remain desirably small while still providing the pilot with all of the most relevant imagery to the flight. Further, the exemplary methods of providing a display set forth above allow for the automatic transitioning of the mode of operation of the CVS system based on the stage of flight of the aircraft. Further, the CVS may automatically transition to an alert mode in the event of an aircraft intrusion or the presence of terrain or an obstacle, thereby providing enhanced safety in the operation of the aircraft.

While at least one exemplary embodiment has been presented in the foregoing detailed description of the inventive subject matter, it should be appreciated that a vast number of variations exist. It should also be appreciated that the exemplary embodiment or exemplary embodiments are only examples, and are not intended to limit the scope, applicability, or configuration of the inventive subject matter in any way. Rather, the foregoing detailed description will provide those skilled in the art with a convenient road map for implementing an exemplary embodiment of the inventive subject matter. It being understood that various changes may be made in the function and arrangement of elements described in an exemplary embodiment without departing from the scope of the inventive subject matter as set forth in the appended claims.

## Claims

1. A method for providing a display to a flight crew of an aircraft comprising the steps of:
providing a synthetic image comprising a first field of view forward of a direction of travel of the aircraft;
providing a sensory image overlaying a first portion of the synthetic image, the sensory image comprising a second field of view forward of the direction of travel of the aircraft, wherein at least a portion of the first field of view and the second field of view overlap one another, and wherein the sensory image is centered within the synthetic image with respect to a horizontal axis; and
moving the sensory image so as to comprise a third field of view forward of the direction of travel of the aircraft and so as to overlay a second portion of the synthetic image such that the sensory image is no longer centered with respect to the horizontal axis within the synthetic image, wherein at least a portion of the first field of view and the third field of view overlap one another.

2. The method of claim 1, wherein the second field of view and the third field of view at least partially overlap one another.

3. The method of claim 1, further comprising providing a flight path vector, and wherein the third field of view is centered over the flight path vector with respect to the horizontal axis.

4. The method of claim 3, wherein the third field of view is further centered over the flight path vector with respect to a vertical axis.

5. The method of claim 1, wherein moving the sensory image further comprises rotating the sensory image clockwise or counterclockwise.

6. A display system configured to provide a display to a flight crew of an aircraft comprising:
an image sensor;
an image display device;
a data storage device that stores navigation information and runway information; and
a computer processor device, wherein the computer processor device is configured to:
generate for display on the image display device a synthetic image comprising a first field of view forward of a direction of travel of the aircraft based at least in part on the navigation information and the runway information;
receive for display on the image display device and from the image sensor a sensory image and display the sensory image overlaying a first portion of the synthetic image, the sensory image comprising a second field of view forward of the direction of travel of the aircraft, wherein at least a portion of the first field of view and the second field of view overlap one another, and wherein the sensory image is centered within the synthetic image with respect to a horizontal axis; and
receive for display on the image display device and from the image sensor a further sensory image comprising a third field of view forward of the direction of travel of the aircraft and move the sensory image so as to overlay a second portion of the synthetic image such that the sensory image is no longer centered with respect to the horizontal axis within the synthetic image, wherein at least a portion of the first field of view and the third field of view overlap one another.

7. The system of claim 6, further comprising an aircraft position detecting system, wherein the synthetic image is generated and displayed further based at least in part on an aircraft position as detected by the aircraft position detecting system.

8. The system of claim 7, wherein the aircraft position detecting system is a GPS system.

9. The system of claim 6, wherein the image sensor is a millimeter wave radar system.

10. The system of claim 6, wherein the image sensor is a forward looking infrared camera.
